# EUROPEAN PATENT APPLICATION

(11) **EP 1 837 793 A1**
(43) Date of publication of application: **26.09.2007**
(21) Application number: 05816932.7
(22) Date of filing: 19.12.2005
(51) Int. Cl.: G06F 21/20, G06F 21/24, H04L 9/32

(54) **NETWORK INFORMATION PROTECTION METHOD AND STORAGE MEDIUM**

(30) Priority: 20.12.2004 JP 2004367992
(71) Applicant: IntelligentDisc, Inc., Yokohama-shi, Kanagawa 2220033 (JP)
(72) Inventor: SHIGETOMI, Takashi, c/o IntelligentDisc, Inc., Yokohama-shi, Kanagawa, 2220033 (JP); KARIMOTO, Hiroyasu c/o IntelligentDisc, Inc., Yokohama-shi, Kanagawa, 2220033 (JP)
(74) Representative: Vossius & Partner
(86) International application number: PCT/JP2005/023231
(87) International publication number: WO 2006/068071

(57) **Abstract**

Biological certification information of a user A and access certification information for each user are stored in a memory in an electronic circuit that is installed on a disc. At the time of driving the disc, the user's biological certification information and the biological certification information stored in the electronic circuit are compared and access certification information is sent out to a network when both information agree to each other. At the network, connection of the user's terminal to a service community is permitted when the user is determined to be an authorized one based on the received access certification information. Determined in the service community are an on-duty concierge who takes care of the service request by the user's terminal and an administration concierge who monitors communication information between the user and the on-duty concierge. Then, the administration concierge keeps monitoring communication information between the terminals used by the user and the on-duty concierge for generating a warning or compulsively interrupting the communication when the monitoring information meets the predetermined condition.

## Description

### FIELD OF THE INVENTION

The present invention relates to network information protecting systems, methods, and storage media, and more particularly to network information protecting systems, methods, and storage media that are capable of maintaining extremely strict security.

### DESCRIPTION OF THE RELATED ART

With the rapid spread of the Internet and broadband network environments, individuals are able to receive a wide variety of services through the Internet. Each user can easily obtain access to network services by using a personal computer (PC) at home or using a portable terminal.

In these services, in the case where information is received by downloading, there is no fear of the personal information of a user leaking out. In electronic commercial transactions such as a network auction, purchase of goods, etc., however, there is a danger of information leakage because the personal information of a user must be disclosed. This type of electronic commercial transaction system is disclosed in Patent Document 1 by way of example.
[Patent Document 1] Japanese Patent Laid-Open Publication No. 2004-318497(FIG. 1, column no. [0009] - [0016] )

### DISCLOSURE OF THE INVENTION

### PROBLEMS TO BE SOLVED BY THE INVENTION

However, in most electronic commercial transactions, personal information, such as user's credit card number and term of validity, personal bank account, address, name, date of birth, etc., has to be disclosed. Since personal information input to networks depends upon how it is used in a destination terminal, there is no guarantee of security of personal information. Further, the personal information is unlimitedly delivered through networks, so there is a great fear of personal information being delivered to others at any moment.

Hence, to ensure security, systems using various authentication means (ID, password, etc.,) for authenticating users have been put to practical use. However, there is always a loophole in such authentication systems, so personal information is sometimes stolen or altered by taking advantage of a system weakness. To enhance the security of authentication systems, it is useful to set ID and a password for each service, but since costs for the management are often charged on users, a cost problem remains unsolved.

In addition, there is a great danger that in electronic commercial transactions, personal information will be used in order to impersonate a user. Besides the impersonation of a user, there is a danger of impersonation even in famous sites because of the participation of malicious traders in reliable e-commerce.

Moreover, in services where users take part in communities through e-mail, e-mail addresses of users are disclosed to the third party, and consequently, there is another fear of users being under an attach of annoying e-mail before they know.

Furthermore, even in systems where information hiding is ensured, when one of two persons in communication with each other tries to exploit vital information such as the personal information of the other person maliciously or purposely, the action cannot be prevented unless the other person knows and refuses. Such a problem is a deathblow to activities in a network society premised on absolute confidence in each other.

The present invention has been made in view of the problems described above. Accordingly, it is the primary object of the present invention to provide a network information protecting method and storage medium that are capable of overcoming such problems.

### MEANS FOR SOLVING THE PROBLEMS

In order to solve the above problems, network information protection method and storage medium according to the present invention employs the following featured structures.
(1) A network information protecting method in which a user terminal accesses and connects with a service community provided in a service provider connected to a network, and in which information of communication with said service community is protected, said method comprising
   a step which, when driving a disk provided with an electronic circuit having a memory region on which living-body authentication information for living-body authentication of a user and access authentication information required for access to said network determined for each user are stored, acquires living-body information on said living-body authentication information from said user by living-body authentication means; and
   a step which compares the acquired living-body information with living-body authentication information stored in said electronic circuit or an external storage medium and, when both are the same, sends out said access authentication information to said network;
   wherein, in said network, by access authentication means, it is judged, based on said access authentication information received, whether or not said user is a regular user, and when said user is judged to be said regular user, a connection of said user terminal with said service community is allowed;
   and wherein, in said service community, a charge concierge who meets a service request from said user terminal, and a watching concierge who watches communication information between said user and said charge concierge, are determined, communication information between said user terminal and a terminal of said charge concierge is watched by watching means, and when watched information meets a predetermined condition, a warning is sent out or said communication is forcibly interrupted.
(2) The network information protecting method as set forth in claim 1, wherein said communication information contains at least one of a character, voice, and an image, and said predetermined condition is a condition that said communication information is the same as information registered beforehand.
(3) The network information protecting method as set forth in claim 1 or 2, wherein said predetermined condition is divided into a plurality of levels, and a warning corresponding to each of said levels is sent out.
(4) The network information protecting method as set forth in any one of claims 1 to 3, wherein said communication information contains personal information of said user.
(5) The network information protecting method as set forth in any one of claims 1 to 4, wherein said electronic circuit or external storage medium stores access destination information, and sends out said access destination information.
(6) The network information protecting method as set forth in any one of claims 1 to 5, wherein said network is equipped with a management center which manages information containing the access authentication information of said user, and the judgment by said access authentication means is performed by comparison with access authentication information managed by said management center.
(7) The network information protecting method as set forth in any one of claims 1 to 6, wherein said access authentication information contains ID and a password of said user.
(8) The network information protecting method as set forth in any one of claims 1 to 7, wherein information transfer at said network by said user is performed by a nickname given beforehand to said user.
(9) The network information protecting method as set forth in any one of claims 1 to 8, wherein said access authentication information is enciphered and output from said user terminal, and at said network, the enciphered access authentication information received is decoded.
(10) The network information protecting method as set forth in any one of claims 1 to 9, wherein said access authentication information is altered each time said user obtains access to said service community.
(11) The network information protecting method as set forth in any one of claims 1 to 10, wherein said access authentication information that is altered is processed based on an open cryptographic key and a secrete decoding key that only said user terminal, said charge concierge terminal, and a watching concierge terminal can know.
(12) The network information protecting method as set forth in any one of claims 1 to 11, wherein said living-body authentication information is fingerprint authentication, face authentication, voiceprint authentication, or iris authentication information.
(13) A network information protecting method in which a user terminal accesses and connects with a service community provided in a service provider connected to a network, and in which information of communication with said service community is protected, said method comprising:
   a step of allowing a connection of said user terminal with said service community;
   wherein, in said service community, a charge concierge who meets a service request from said user terminal, and a watching concierge who watches communication information between said user and said charge concierge, are determined, communication information between said user terminal and a terminal of said charge concierge is watched by watching means, and when watched information meets a predetermined condition, a warning is sent out or said communication is forcibly interrupted.
(14) A storage medium having a program for causing a computer to carry out the method as set forth in any one of claims 1 to 13.

### ADVANTAGES OF THE INVENTION

According to the present invention, personal information stored on an optical disk (including ordinary disk storage media) is enciphered and stored on the memory region of an electronic circuit mounted on the optical disk. The personal information is also enciphered and stored in a service provider. The two pieces of personal information can be enciphered and decoded only by a cryptographic key and a decoding key that only the user and provider know, so security over personal information is remarkably enhanced. That is, the optical disk of a user functions as the passport of the user to a network society. Therefore, the provision of information can be limited to destination terminals desired by a user. When receiving network services (when gaining access to a network, users need not to input information for authentication (ID and a password). Information for authentication is automatically generated by an optical disk driven and can be decoded only by a user and a service provider (management server). Furthermore, a bidirectional one-time password is sent out. Thus, at the time of the access to a network, security is ensured. Users can freely take part in, belong to, and secede from service communities while maintaining strict security. What is disclosed to network societies by users is not user's name but user's nickname, so the problem of the disclosure of personal information is eliminated. Thus, according to the present invention, access to the Internet is obtained by information that is stored in an electronic circuit mounted on an optical disk for each user. Therefore, even if user's nickname is disclosed, the real existence of the user is guaranteed. Thus, users are able to obtain access to the Internet and receive services, while maintaining extremely strict security. And particularly, in the present invention, users are able to receive desired services by communicating directly with a person in charge, while preventing the leakage or exploitation of vital information such as personal information. Thus, the present invention is capable of reliably enhancing the confidence of service providers in customers.

### BRIEF DESCRIPTION OF THE DRAWINGS

FTG. 1 is a basic system block diagram for realizing a network information protecting method according to the present invention;
FIG. 2 is a diagram showing a configuration in the present invention where an optical disk is driven with a disk drive;
FIG. 3 is a flowchart showing a registration processing procedure in a user registration center and a management center according to the present invention;
FIG. 4 is a flowchart showing a processing procedure for forming the entry of a user into a society (channel) according to the present invention;
FIG. 5 is a diagram showing the functions and service contents displayed on the display screen of a user's PC that are available in the present invention;
FIG. 6 is a flowchart showing the flow of processing in an embodiment of the present invention; and
FIG. 7 is a flowchart for explaining the processing in the embodiment of the present invention shown in FIG. 6.

### DESCRIPTION OF THE NUMERALS

- 1A~IE: a user terminal
- 2A~2E: a front end service
- 3: a management center
- 4: a user registration center
- 11A~11E: a living body authentication section
- 31A~31F: a agent
- 311~313: a channel CH1~CH3
- 100: a disk drive
- 110: a electronic circuit
- 111: a transmitting-receiving unit
- 112: a signal processing unit
- 113: a memory
- 120: a optical data storage
- 130: a drive unit
- 140: a memory
- 200: a transmitter-receiver
- 300: a personal computer
- 310: a read-only memory (ROM)
- 320: a random access memory (RAM)
- 330: an arithmetic processing unit
- 340: a display
- 400: a living body authentication device
- 500A~500C: watching means (watching device)

### DESCRIPTION OF THE PREFERRED EMBODIMENTS

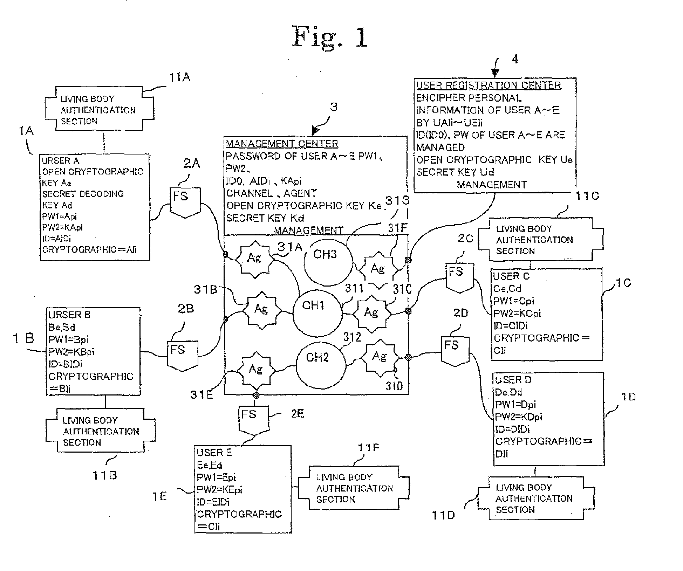

The configuration and operation of a preferred embodiment of a network information protection method and storage medium according to the present invention will hereinafter be described in detail with reference to the accompanying drawings. FIG. 1 is a basic system configuration diagram for carrying out a network information protection method according to the present invention.

In the following description, the present invention is applied to an optical disk equipped with an electronic circuit that has a central processing unit (CPU) function and a memory, etc. However, it is needless to say that the present invention is not limited to such an optical disk, but may be applicable to arbitrary disks and storage media. A configuration for carrying out the present invention is not limited to the configuration described below. The present invention can employ an arbitrary well-known configuration, and can adopt configurations capable of achieving the same function.

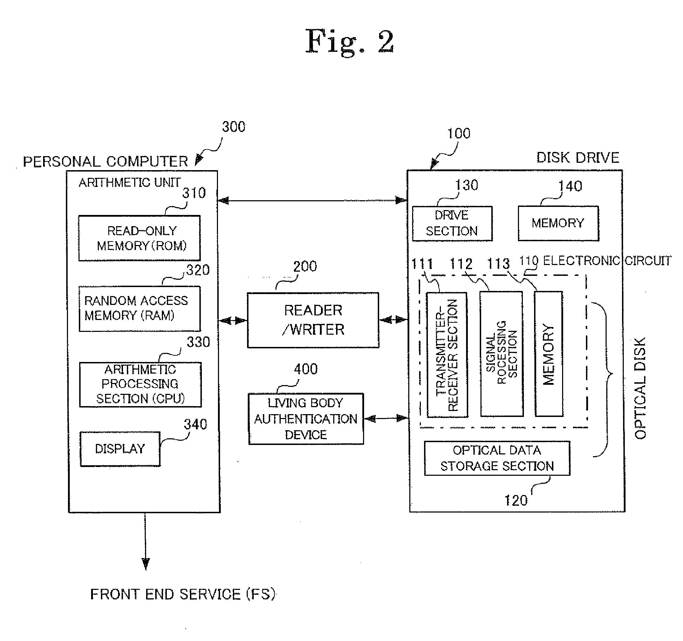

FIG. 2 is a diagram showing the configuration of this embodiment in which an optical disk is driven with a disk drive. In the configuration of FIG. 2, by rotating the optical disk with the disk drive 100, data is read from or written to the optical disk. The optical disk has a data storage region provided on one side thereof, on which data (contents data, etc.) is stored. On the other side of the optical disk, an electronic circuit (CPU) 110 for carrying out predetermined signal processing is mounted. The electronic circuit 110 is equipped with a transmitting-receiving unit 111, a signal processing unit 112, and a memory region 113. The processed signals in the electronic circuit 110 and external information, for example, are sent to and received from an external circuit through the radio unit (transmitting-receiving unit) 111 of the disk drive as radio signals.

The disk drive 100 is provided with an insertion slot (not shown) into which the optical disk is inserted. The optical disk inserted is rotated at a predetermined speed. With the optical disk being rotated, laser light is irradiated from an optical pickup toward the optical disk surface, and the reflected light is detected through the optical pickup, whereby optically recorded data is read out. Laser light is also irradiated from the optical pickup to write data to the optical disk.

The disk drive 100 is equipped with a drive unit 130 for rotating the optical disk and a memory region 140 (which is not necessarily required). One side of the optical disk is equipped with an optical data storage region 120, which has at least either a ROM region, on which music information, video information, program information, and other information are stored, or a RAM region, to which arbitrary data can be written. The other side of the optical disk is equipped with the electronic circuit 110 having a CPU function. The electronic circuit 110, for example, can be formed as a radio frequency identification (RF-ID) section. Of course, the electronic circuit 110 can also be provided on the above-described one side.

The RF-ID section generally makes possible non-contact communication which uses electromagnetic waves. That is, reading and writing of data from and to a semiconductor memory (IC chip) can be performed in a non-contact state by the RF-ID section. The RF-ID section normally comprises an IC chip and a coil-shaped antenna connected to the IC chip.

A transmitter-receiver 200 has a reader-writer function, and transmits and receives data to and from the transmitting-receiving unit 111 by radio communication, the transmitting-receiving unit 111 being provided in the IC chip of the RF-ID section (electronic circuit 110) mounted on the optical disk surface. The data communication between the transmitter-receiver 200 and the transmitting-receiving unit 111 of the electronic circuit 110 is performed, for example, at a transmission rate of 106 Kbytes/s (Kbps).

If the electronic circuit 110 (RF-ID section) receives radio waves from the transmitter-receiver 200 through the antenna (transmitting-receiving unit 111), a resonance phenomenon causes an electromotive force to occur (electromagnetic induction, etc.), and this electromotive force is rectified by a power-supply rectifier and is used as a power source for the electronic circuit 110. With this power source, the IC chip of the RF-ID section is started. It is needless to say that the power supply is not limited to such a configuration.

A personal computer (PC) 300 is equipped with a read-only memory (ROM) (storage device) 310 on which basic information such as an operating system (OS) is stored, a random access memory (RAM) 320 as a rewritable storage device, an arithmetic processing unit 330 such as a CPU, and a display 340 such as a liquid crystal display. The PC 300 performs desired signal processing by transmitting and receiving data to and from the disk drive 100.

A living body authentication device 400 is used to limit the start and operation of this system to only authorized users. Examples of living body parameters are fingerprint authentication, face authentication, voiceprint authentication, and iris authentication parameters. When starting the disk drive 100 (or when starting the disk drive 100 connected to the PC 300), a user touches, for example, a fingerprint reader for fingerprint authentication with a predetermined finger so that the fingerprint is optically read, and then the read fingerprint is compared with a previously registered user's fingerprint. Only when both are the same, the user is authorized to use the disk drive 100 as a regular user.

Based on the configuration described above, this embodiment adopts various schemes to prevent invasion and leakage of personal information due to illegal impersonation.

First, an optical disk with the electronic circuit 110 having a memory region is prepared for each user, or it is prepared for each community in which a user desires to participate. On the memory region of the electronic circuit 110, user's identification (ID) and information required for access have been stored. These pieces of information (e.g., ID, a password, etc.) are altered each time the user gains access to a community, and on top of that, these pieces of information are enciphered in a form that only the user and the management center (which is installed at a service provider) can know. The memory region of the electronic circuit also has data for user authentication stored thereon. This embodiment uses living-body authentication data, and the memory region has, for instance, fingerprint data stored thereon.

The disk drive 100 is connected with a fingerprint detector which functions as the living body authentication device 400, or has the fingerprint detector incorporated therein. If the user inserts his own optical disk into the disk drive, the disk drive compares the fingerprint data obtained by fingerprint detector with the fingerprint data stored on the memory region of the electronic circuit and, when both data are the same, judges the user to be a regular user. Next, the subsequent processing steps are carried out.

Referring to FIG. 1, this embodiment of the present invention is applied to the case where one or a plurality of users previously registered, A to D, use terminals 1A to 1D (PC 300 of FIG. 2) to take part in a community managed by the management center 3 (which functions as a service provider) through a network such as the Internet, etc.

The community managed by the management center 3 is provided with a plurality of societies 311 to 313 (e.g., channels CH 1 to CH3 in FIG. 1). Users enter their desired societies by sending an entry request to the management center 3 through the front end services 2A to 2D ···.

Users are registered beforehand in an organization (user registration center 4) which controls the management center 3, and only registered users can receive network services (entry into a society, etc.) managed by the management center 3. That is, each of registered users, given user's code ID, a password, etc., sends these pieces of information to the management center 3, and only the user judged to be a regularly registered user by the management center 3 is able obtain access to the management center 3 to receive the above-described services.

The management center 3 has a great number of agents 31A to 31E ···, which are used to control connections between the front end services 2A to 2D ... and the societies 311, 312, 313 ··· (channels CH1, CH2, CH3 ···). In FIG. 1, the user's terminals 1A to 1E are provided with corresponding agents 31A to 31E.

The management center 3 has the user registration center 4 incorporated therein, or is connected through the agent 31F with the user registration center 4, in which user information is stored. By enciphering personal information, ID information, password information, and other information as user information when necessary, the user registration center 4 stores and manages them. For instance, personal information, such as the driver's licenses and resident's cards of users A to E, is coded by a corresponding cryptographic key (UA 11 to UE11) and is stored on the memory region of the user registration center 4. ID information and password information, allocated to each user, are also managed. In the example of FIG. 1, "U" indicates a user, "A and E" are individual users, "I" is personal information, and a numeral last added is the number of times that access was obtained.

The user registration center 4 is used to manage various kinds of information, and manages various kinds of information, such as the passwords PW1 and PW2 and ID information (ID0, AIDi) of users A to E, the password KApi of the management center 3, channels, agents, an open cryptographic key Ke, a secret decoding key Kd, etc. The user registration center 4 is connected to the management center 3 through the agent 31F so that information can be transmitted and received therebetween.

The front end services 2A to 2E are connected to the agents 31A to 31E, and through these agents, desired front agent services to be connected to each other are directly connected. This differs from a normal Internet connection in that units or other devices to be connected together are connected by using their IP addresses.

In the configuration described above, when transmitting and receiving data between the user terminals 1A to 1E and the management center 3 (user registration center 4), various enciphering processes and decoding processes are performed in order to ensure security. These enciphering processes are performed by open cryptographic keys, while the decoding processes are performed by secret decoding keys corresponding to open cryptographic keys.

Next, the process of registering user's information in the user registration center 4 and management center 3 and the process of forming the entry of a user into a society will be described.

Initially, a description will be given of the meanings of symbols used in these processes (in this example, a description will be given of user A).

"Ae[ID0, Ap0, AI0]" represents information enciphered from the first ID (base code ID0), password (Ap0), and cryptographic key (AI0) of user A by the open cryptographic key Ae.

"Ad{ Ae[ID0, Ap0, AI0]}" represents information decoded from the enciphered information Ae[ID0, Ap0, AI0] by the secrete decoding key Ad.

"Ke" and "Kd" represent an open cryptographic key and a secret decoding key that are managed in the management center 3, and they are made beforehand in the management center 3. An open cryptographic key "Ue" and a secret decoding key "Ud" in the user registration center 4 are likewise made beforehand.

"UAI0" is the initial cryptographic key of user A issued by the user registration center 4. The user registration center 4 enciphers personal information of user A by using the initial cryptographic key UAI0 of user A, and stores and manages the enciphered information in a holder labeled "base code ID0" that is to be described later.

The base code ID0 is a code that is uniquely issued by the user registration center 4. An example is a unique code such as P4KYU%7. In reality, the base code ID0 is represented by a code that is assumed to be unique. The user registration center 4 manages personal information and other information of user A by using the base code ID0, and based on this base code ID0, reading and writing of information are performed. The user registration center 4 can manage only information corresponding to the base code ID0, but cannot obtain information specifying each user.

"Kd{Ke[ID0, Ap0]}" means information decoded by the secrete decoding key Kd of the management center 3 from the information Ke[ID0, Ap0] enciphered from information [ID0, Ap0] by the open cryptographic key Ke of the management center 3.

"Ad{Ae[ID0, Ap0]}" means information decoded by the secrete decoding key Ad of user A from the information Ae[ID0, Ap0] enciphered from the information [ID0, Ap0] by the open cryptographic key Ae of user A.

"AID1" is called a basic code and consists of a base code ID0 and an auxiliary code AAID1 and is represented by AID1 = ID0 (base code) + AAID1 (auxiliary code). The auxiliary code AAID1 is made by the electronic circuit mounted on an optical disk that the user has.

Information of user A (not only personal information but also all necessary information) cannot be obtained without the basic code. That is to say, information specifying user A cannot be accessed by the base code ID0 or auxiliary code AAID0 alone. It can be accessed only by the basic code ATD1 containing both. As a result, as previously described, in the user registration center 4, access to information specifying user A cannot be obtained.

For instance, if the base code ID0 is represented by OP4KY%7 and the auxiliary code AAID1 by QSC56VBA, the basic code AID1 can be expressed as AID1 = OP4KY%7 + QSC56VBA.

"Ud{Ue[ID0, UAI1, Ap1]}" represents information decoded by the secrete decoding key Ud of the user registration center 4 from the information Ue[ID0 UAI1, Ap1] enciphered from information [ID0, UAI1, Ap 1] by the open cryptographic key Ue of the user registration center 4.

"Ke[ID0, AID1, Ap1, nickname]" represents information enciphered from information [ID0, AID1, Ap1, nickname] by the open cryptographic key Ke of the management center 3.

"Kd{Ke[ID0, AID1, Ap1, nickname]}" represents information decoded by the secrete decoding key Kd of the management center 3 from the information Ke[ID0, AID 1, Ap1, nickname] enciphered from information [ID0, AID1, Ap1, nickname] by the open cryptographic key Ke of the management center 3.

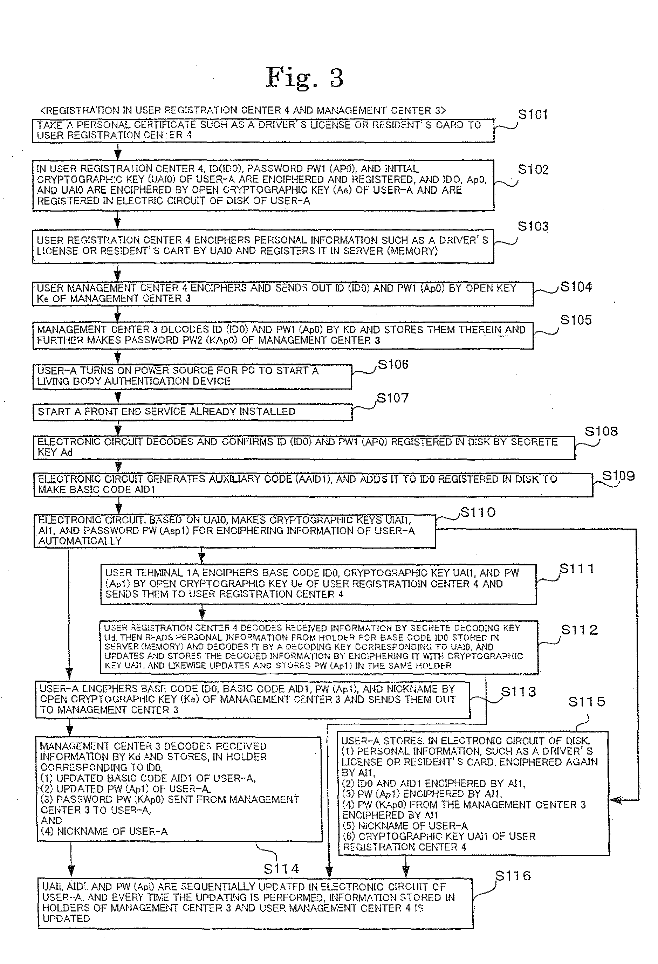

Next, the registration process in the user registration center 4 and management center 3 will be described with reference to a flowchart of FIG. 3.

First, user A takes a personal certificate such as a driver's license or resident's card to the user registration center 4 (step S101). In the user registration center 4, the ID (base code ID0), password PW1 (initial password AP0 of user A), and initial cryptographic key (AI0) of user A are enciphered by the open cryptographic key (Ae) of user A and are registered in the electronic circuit mounted on the optical disk of user A (step S102). In addition, personal information such as a driver's license or resident's card is enciphered by the initial cryptographic key UAI0 of the user registration center 4 and is registered and stored in a server (memory) (step S103).

The user registration center 4 also enciphers the information ID (ID0) and password PW 1 (Ap0) of user A with the open cryptographic key Ke prepared in the management center 3 and sends them to the management center 3 (step S104).

The management center 3 decodes the information ID (ID0) and password PW1 (Ap0) received from the user management center 4 by the secrete decoding key Kd prepared in the management center 3 and stores them therein, and makes a password PW2 (KAp0), which is stored in the management center 3 (step S105).

When actually obtaining access to the management center 3, user A turns on a power source for a PC and peripheral devices and then performs living-body authentication by a living body authentication device 11A (living body authentication device 400 in FIG. 2). After being confirmed as an authorized user, user A starts the optical disk (step S106) and starts the front end service 2A installed in the optical disk or PC (step S107).

Next, the electronic circuit decodes by the previously prepared secrete decoding key Ad the ID (base code IDO) and password PW1 (Ap0) registered in the optical disk at the user registration center 4 and confirms them (step S108). The electronic circuit also generates an auxiliary code (AAID1), and adds it to the base code ID0 registered in the optical disk to make a basic code AID1 (AID1 = ID0 + AAID1) (step S109). At the same time, the electric circuit, based on the initial cryptographic key UAI0 registered in the user registration center 4, makes the cryptographic key UIAI1, cryptographic key AI1, and password PW (Ap1) of user A that are used for enciphering in the user registration center 4 (step S110). The electronic circuit of the user terminal 1A makes the open cryptographic key Ae, secrete decoding key Ad, and password PW1 of user A, the password PW, ID (basic bode AID1), and cryptographic key AIi that are used in the management center 3, and so forth. Likewise, the user terminals 1B to 1E make the same information.

The user terminal 1A enciphers the base code ID0, cryptographic key UAI1, and password PW (Ap1) by the open cryptographic key (Ue) of the user registration center 4 and sends them to the user registration center 4 (step S111).

The user registration center 4 decodes the received information by the secrete decoding key Ud, then reads personal information from the holder labeled the base code ID0 and decodes the personal information by a decoding key corresponding to the cryptographic key UAI0, and enciphers and updates the decoded information by the cryptographic key UAI1 and stores the updated information. The user registration center 4 also updates and stores the password PW (Ap1) in the same holder (step S112).

The user terminal 1A enciphers the base code ID0, basic code AID1, password PW (Ap1), and nickname of user A, which are access codes, by the open cryptographic key (Ke) of the management center 3, and sends them to the management center 3 (step S113).

The management center 3 decodes information received from the user terminal A by the secrete decoding key Kd and stores, in the holder corresponding to the base code ID0,
(1) Updated basic code ATD1 of user A,
(2) Updated password PW (Ap 1) of user A,
(3) Password PW (KAp0) sent from the management center 3 to user A, and
(4) Nickname of user A (step S114).

After step S 110, the electronic circuit mounted on the optical disk of the user terminal 1A stores
(1) Personal information, such as a driver's license or resident's card, enciphered again by AI1,
(2) Base code ID0 and AID 1 enciphered by AI1,
(3) Password PW (KAp0) from the management center 3 enciphered by AI1,
(4) Nickname of user A, and
(5) Cryptographic key UAI 1 of the user registration center 4 (step S115).

After steps S112, S114, and S115, the i^{th} cryptographic key UAIi, base code AIDi, and password PW (Api) are sequentially updated in the electronic circuit of the optical disk of user A, and every time the updating is performed, information stored in the holders of the management center 3 and user management center 4 is updated (step S116).

As has been described above, the ID and password of user required at the time of the access to the Internet are automatically generated two-dimensionally, and each time access is obtained, the ID and password are generated so that they are altered with each other. The generated ID and password are enciphered, and they can be decoded only with each other.

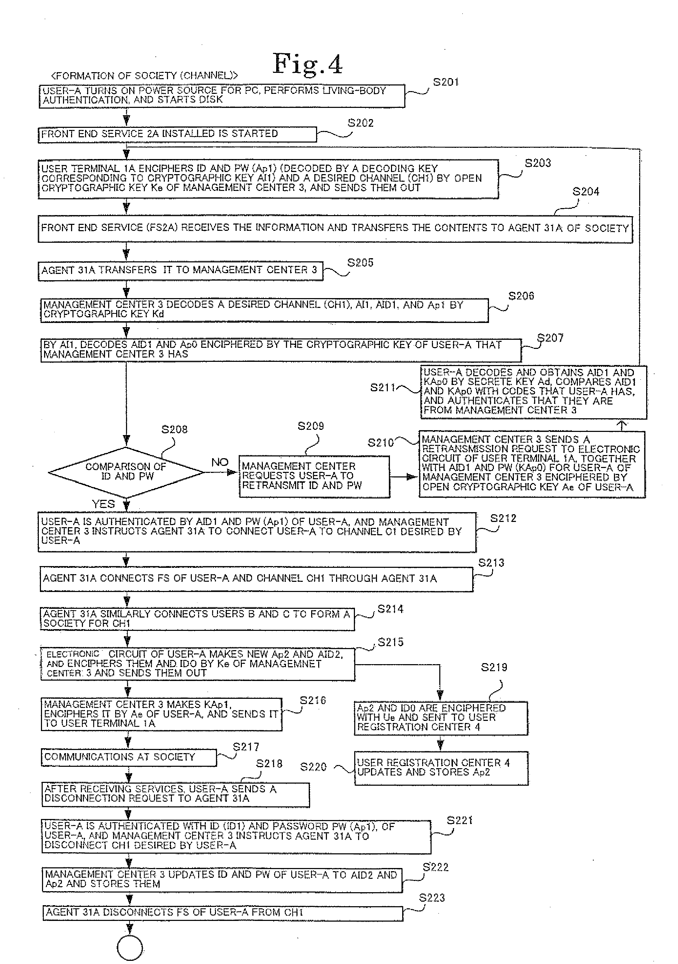

Next, the process of forming the society (channel) will be described with reference to a flowchart of FIG. 4.

First, user A turns on a power source for a PC and peripheral devices and performs living-body authentication by the fingerprint authentication device 11A. After being confirmed as an authorized user, user A starts the optical disk with the disk drive (step S201) and starts the front end service 2A (step S202). This front end service 2A can be used as a special program for Internet connection installed in the optical disk by performing a special program process set for each user. Based on information unique to a user stored on the optical disk, this special program is used to implement the process, provided in the management center 3 at the service provider side, for connecting the user to a society (channel CH1, CH2, or CH3, ...) desired by the user.

That is to say, the user terminal 1A decodes the ID (base code AID1) and password PW (Ap1) registered in an optical disk at the user registration center 4 by a decoding key corresponding to the cryptographic key All, and enciphers the decoded ID, password PW (Ap1), and a desired channel (e.g., channel CH1 in this embodiment) by the open cryptographic key Ke of the management center 3, and sends them out (step S203). The front end service 2A transfers the information received from the user terminal 1A, to the agent 31A that controls a connection to a society (step S204). The agent 31A sends it to the management center 3 (step S205).

The management center 3 decodes the desired channel (CH1), cryptographic key AI1, base code AID1, and password Ap 1 by the cryptographic key Kd (step S206). The user terminal 1A decodes by the decoding (secrete) key Ad the base code AID1 and the initial value Ap0 of the password enciphered by the cryptographic key of user A that the management, center 3 has, thereby obtaining the base code AID1, and the password word KAp0 stored in the management center 3 (step S207).

Next, the ID of user A thus obtained is compared with the password PW (step S208). If both are not the same, the management center 3 requests user A to retransmit his or her ID and password PW (step S209). The management center 3 sends a retransmission request to the electronic circuit of the user terminal 1A, together with the base code AID1 and the password PW (KAp0) for user A of the management center 3 enciphered by the open cryptographic key Ae of user A (step S210). Next, user A decodes and obtains the base code AID1 and the password KAp0 of the management center 3 by the secrete cryptographic key Ad, compares the base code AID1 and the password KAp0 of the management center 3 with codes that user A has, and authenticates that they are from the management center 3 (step S211). Thereafter, step S211 returns to step S203.

If the ID and password PW are decided to be the same as a result of the comparison in step S208, user A is authenticated by the ID (AID1) and password PW (Ap1) of user A, and the management center 3 instructs the agent 31A to connect user A to the channel C 1 desired by user A (step S212).

The agent 31A connects the front end service 2A of user A and the channel CH1 therethrough (step S213).

The agent 31A likewise connects desired user terminals such as user terminals 1B and 1C to form a society for channel CH1 (step S214).

The electronic circuit mounted on the optical disk of the user terminal 1A makes a new (second access) password Ap2 and cryptographic key AID2, and enciphers them and IDO with the open cryptographic key Ke of the management center 3 and sends them out (step S215).

The management center 3 makes a password KAp1, enciphers it with the open cryptographic key Ae of user A, and sends out the enciphered password KAp 1 to the user terminal 1A (step S216). User A receives communications and services from the society (step S217). After receiving services, user A sends a disconnection request to the agent 31A (step S218).

After step S218, if user A is authenticated with the ID (ID1) and password PW (Ap 1) of user A, the management center 3 instructs the agent 31A to disconnect the channel 1 desired by user A (step S221). The management center 3 updates the ID and password PW of user A to the base code AID2 and password Ap2 newly made and stores them (step S222). And the agent 31A disconnects the front end service 2A of user A from the channel CH1 (step S223).

On the other hand, after step S215, the password Ap2 and base code ID0 at the time of the second access of user A to the user registration center 4 are enciphered with the open cryptographic key Ue and sent to the user registration center 4 (step S219). The user registration center 4 updates the password Ap2 decoded with the secrete decoding key Ud and stores it (step S220).

Through the same processing as the processing described above, other users are also connected to desired channels, from which they receive desired services.

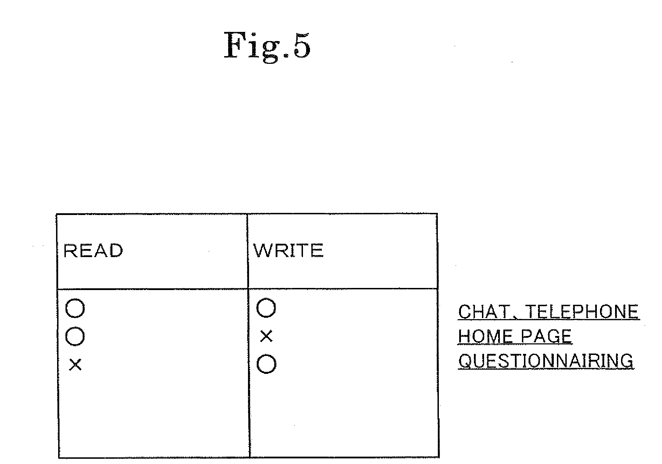

In this manner, a plurality of users are able to take part in a predetermined society. On the display screen of the PC of user A participating in the society, the notice board of the society is displayed, and nicknames of participants, including user A, are displayed. As shown in FIG. 5, the notice board displays the reading and writing functions and services (chat, telephone, home page, questionnairing, etc.).

Now, another embodiment of the present invention will hereinafter be described. For example, by taking advantage of the invention of the aforementioned embodiment, this embodiment is used to prevent leakage and exploitation of vital information such as personal information of a user when consulting with a concierge.

An example is a case such that, in the system of FIG. 1, user A unaccustomed to PC enters a concierge system (PC supporting system) which is one of the societies of a community managed by the management center 3, and communicates with a concierge of that system who teaches and manages PC manipulation.

In this embodiment, it is assumed that user A consults with a charge concierge C. In this case, the user A sends and receives information (voice, images, characters, etc.) to and from the charge concierge C through a network, so there is a fear of the personal information of the user A leaking or being exploited by a leading question of the concierge C and there is another fear of information in question leaking or being exploited unexpectedly. The leakage and exploitation of personal information by a leading question cannot be usually avoided. Such a problem is fatal to the activities in a network society promised on absolute confidence in each other.

In this embodiment, to solve such a problem, the leakage and exploitation of persona information by the charge concierge C is watched by another concierge (watching concierge) D, and when such leakage and exploitation of information is recognized, the communication between the user A and the charge concierge C is interrupted at once. For this purpose, this embodiment is configured such that the watching concierge D is able to watch the communication between the user A and the charge concierge C at all times.

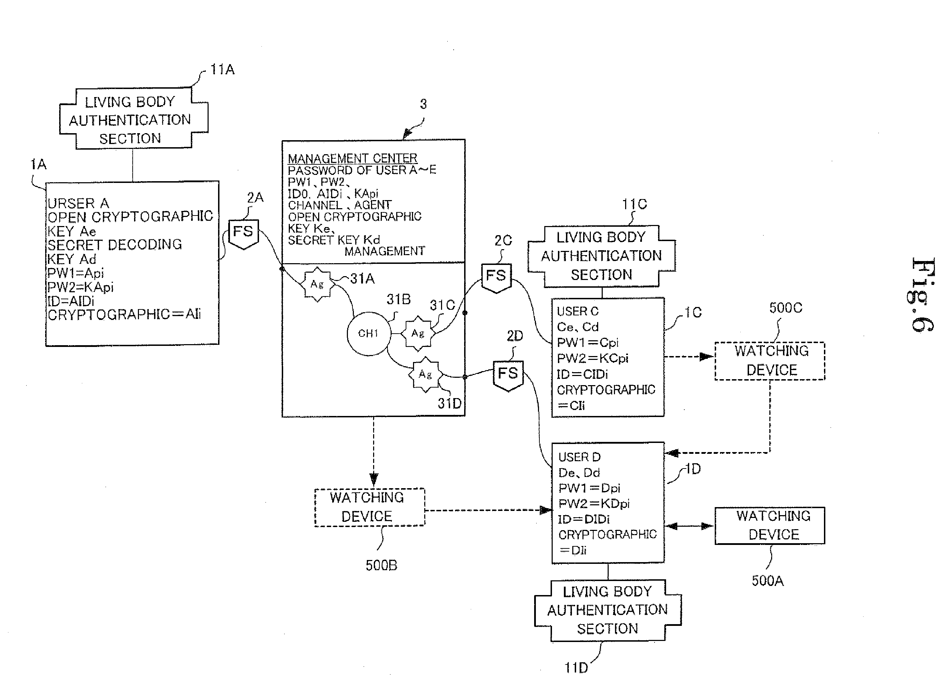

FIG. 6 shows a simplified block diagram for explaining this embodiment.

As with the aforementioned, in the signal transfer between the terminals 1A, 1C, and 1D of the user A, charge concierge C, and watching concierge D and the management center 3 (user registration center 4 not shown), the aforementioned various enciphering processes and decoding processes for ensuring security are performed and information is enciphered. The enciphered information can be decoded only by authorized users. In this embodiment, the watching concierge D can acquire information that is transferred between the user A and the charge concierge C with the same condition as the charge concierge C.

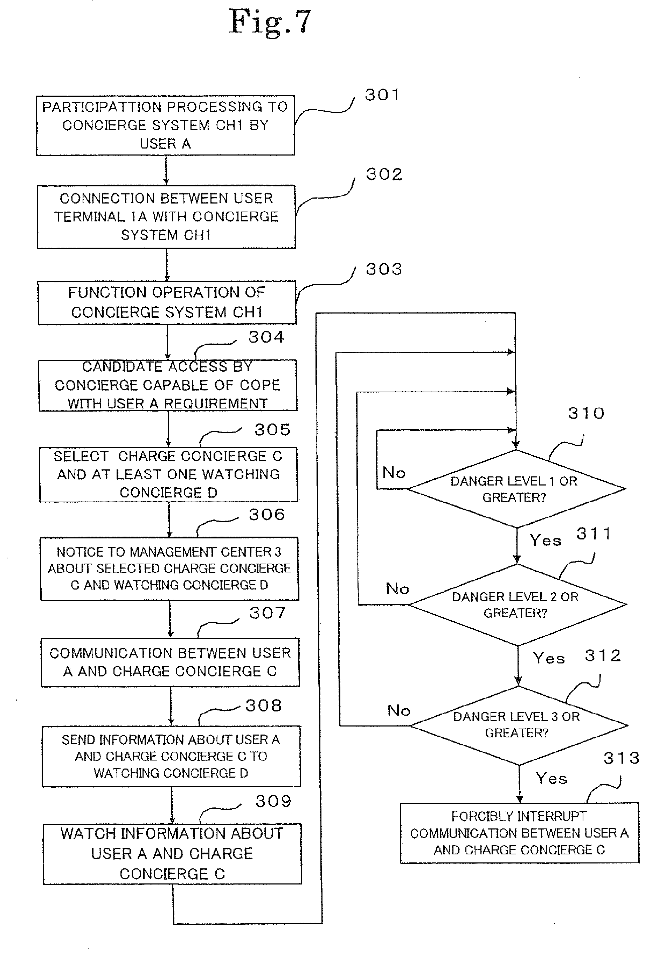

The flow of processing in this embodiment will be described with reference to the configuration diagram of FIG. 6 and the flowchart of FIG. 7.

First, when user A unaccustomed to PC consults with a concierge whose specialty is PC manipulation, if the user A is judged to be a regular user by ID, a password PW, etc., the process of participating in a society (channel CH1) functioning as a concierge system is executed (step S301).

Thereafter, the management center 3 instructs the agent 31A to connect user A with a concierge system {society 311 (channel CH1)}. The agent 31A connects the front end service (FS) 2A of the terminal 1A of the user A and the channel CH1 through the agent 31A (step S302).

Next, the concierge system functions (step S303), and if a concierge meets a request from the user A, an access process for running as a candidate in a society which functions as a concierge system is carried out (step S304). In the concierge system, a charge concierge is determined from concierge candidates by arbitrary standards. At the same time, at least one watching concierge D is selected from the candidates or other concierges (step S305).

A notice about the selection of the charge concierge C and watching concierge D is also sent to the management center 3 (steps S306).

Subsequently, the user A and concierge C receive information to start communication, and the charge concierge C gives the user A various kinds of information for solving problems. In the provision of the information for solving problems, not only voice information and character information but also the state of a PC being operated by the charge concierge C is sent to the user A as image data and displayed on the monitor screen of the terminal 1A of the user A, whereby visually effective information can be given to the user A. Conversely, information from the user A can also be sent to the charge concierge C as image data and displayed on the monitor screen of the charge concierge C (step S307).

Under the management of the concierge system, the information that is transmitted and received between the user A and the charge concierge C is also sent to the watching concierge D (step S308), and the watching concierge D watches the information (communication information) that is transmitted and received between the user A and the charge concierge C (step S309). This watching may be performed constantly or intermittently (at predetermined intervals). Information to which attention must be paid, such as information requesting disclosure of personal information (keyword or image information), may be determined beforehand. And when a keyword or image is detected from received information, a warning may be generated to give an alarm to the watching concierge D. This watching can be performed by a voice recognizing device for recognizing voice information and judging whether it is the same as the above-described keyword, or when an image similar to a predetermined image is detected by an image recognizing device, an alarm may be sent out.

The above-described watching means can be installed in a terminal that the watching concierge D is using (watching means (watching device) 500A in FIG. 6). It can also be installed in the server of the concierge system (watching means 500B in FIG. 6). Further, it is evident that the watching means can be installed in the management center 3.

In addition, if communication information is directly acquired as live data by the watching means 500C connected to a terminal that the concierge C uses, and danger is judged based on this information, more reliable watching becomes possible.

In the watching process, information to which attention must be paid (keyword or image information) is predetermined, and when the predetermined keyword or image is detected from information received, a warning is sent out. However, by sending out a warning in stages according to the degree of danger, fine warning control can be performed. That is, the degree of danger of the keyword or image can be set in stages. For example, a level 1 can be set to a stage at which attention must be paid to a future trend, a level 2 to a stage at which danger is considerably high, and a level 3 to a stage at which danger is so extremely high that the communication between the user A and the charge concierge C needs to be interrupted. As the stage of the level 3, for instance, when the charge concierge C acquires vital personal information such as the name, address, credit card number, term of valid, etc., of the user A (when the keyword or image is detected), the action must be interrupted (otherwise the confidence of the concierge system will be lost) and therefore the watching concierge D immediately interrupts the communication between the user A and the charge concierge C.

The next process of setting the dangerous levels and judging the degree of danger of the communication information between the user A and the charge concierge C is carried out. That is to say, it is judged whether the degree of danger is the level 1 or greater (step S310), and if the degree of danger is the level 1 or less and there is no danger, the judgment of the dangerous level is continued. If it is the level 1 or greater, in step S311 it is judged whether the degree of danger is the level 2 or greater. If the degree of danger is the level 2 or less, the processing returns to step S310. If it is the level 2 or greater, or if the judgment of the level 1 or greater is made a predetermined number of times, in step S312 it is judged whether the degree of danger is the level 3 or greater. If the degree of danger is the level 3 or less, the processing returns to step S310. If the judgment of the level 3 or greater or judgment of the level 2 or greater is made a predetermined number of times, the process of forcibly interrupting the communication between the user A and the charge concierge C is immediately carried out (step S313). The reason why it is judged whether the judgment of the level 1 or greater or judgment of the level 2 or greater is a predetermined number of times or greater is that if a dangerous action at such levels is repeated many times, there is a possibility of an action at a higher dangerous level being performed.

In the foregoing, it is a matter of course that after the user A participating in the concierge system, the charge concierge C, and the watching concierge D are authenticated by the living body authentication devices 11A, 11G, and 11D, the above-described access becomes possible.

According to the embodiment in which the above-described process is carried out, the user A is able to receive a desired service from the charge concierge C, and the leakage and exploitation of vital information such as personal information of the user A is prevented, whereby the confidence of a society (such as a concierge system) in customers can be reliably improved.

In this foregoing description, desired front end services that should be connected with each other are directly connected without IP networks and e-mail addresses. Therefore, without disclosing personal information, e-mail magazines and the like can be received from user terminals installed by e-mail magazine service providers.

In addition, if a user terminal is installed at a bank or forwarding agent, accounts can be settled without disclosing credit card information to a trader by inputting a transfer account instruction to a terminal unit of the bank after network shopping. All that is required is to disclose only an address to a forwarding agent, so unlimited disclosure of personal information can be avoided and security is enhanced.

Each process in the above-described embodiment is described as a program, and processes based on this program can be implemented by a computer. That program is stored on a storage medium.

While the configuration and operation of the preferred embodiment of the present invention have been described in detail, the invention is not to be limited to the details given herein, but may be modified within the scope of the invention hereinafter claimed. For example, the electronic circuit may be an optical circuit, and information may be stored in the electronic circuit and/or on disks. Instead of disks, any type of storage medium may be used if it can be detachably connected like a USM memory device.

## Claims

1. A network information protecting method in which a user terminal accesses and connects with a service community provided in a service provider connected to a network, and in which information of communication with said service community is protected, said method comprising:
a step which, when driving a disk provided with an electronic circuit having a memory region on which living-body authentication information for living-body authentication of a user and access authentication information required for access to said network determined for each user are stored, acquires living-body information on said living-body authentication information from said user by living-body authentication means; and
a step which compares the acquired living-body information with living-body authentication information stored in said electronic circuit or an external storage medium and, when both are the same, sends out said access authentication information to said network;
wherein, in said network, by access authentication means, it is judged, based on said access authentication information received, whether or not said user is a regular user, and when said user is judged to be said regular user, a connection of said user terminal with said service community is allowed;
and wherein, in said service community, a charge concierge who meets a service request from said user terminal, and a watching concierge who watches communication information between said user and said charge concierge, are determined, communication information between said user terminal and a terminal of said charge concierge is watched by watching means, and when watched information meets a predetermined condition, a warning is sent out or said communication is forcibly interrupted.

2. The network information protecting method as set forth in claim 1, wherein said communication information contains at least one of a character, voice, and an image, and said predetermined condition is a condition that said communication information is the same as information registered beforehand.

3. The network information protecting method as set forth in claim 1 or 2, wherein said predetermined condition is divided into a plurality of levels, and a warning corresponding to each of said levels is sent out.

4. The network information protecting method as set forth in claim 1, wherein said communication information contains personal information of said user.

5. The network information protecting method as set forth in claim 1, wherein said electronic circuit or external storage medium stores access destination information, and sends out said access destination information.

6. The network information protecting method as set forth in claim 1, wherein said network is equipped with a management center which manages information containing the access authentication information of said user, and the judgment by said access authentication means is performed by comparison with access authentication information managed by said management center.

7. The network information protecting method as set forth in claim 1, wherein said access authentication information contains ID and a password of said user.

8. The network information protecting method as set forth in claim 1, wherein information transfer at said network by said user is performed by a nickname given beforehand to said user.

9. The network information protecting method as set forth in claim 1, wherein said access authentication information is enciphered and output from said user terminal, and at said network, the enciphered access authentication information received is decoded.

10. The network information protecting method as set forth in claim 1, wherein said access authentication information is altered each time said user obtains access to said service community.

11. The network information protecting method as set forth in claim 1, wherein said access authentication information that is altered is processed based on an open cryptographic key and a secrete decoding key that only said user terminal, said charge concierge terminal, and a watching concierge terminal can know.

12. The network information protecting method as set forth in claim 1, wherein said living-body authentication information is fingerprint authentication, face authentication, voiceprint authentication, or iris authentication information.

13. A network information protecting method in which a user terminal accesses and connects with a service community provided in a service provider connected to a network, and in which information of communication with said service community is protected, said method comprising:
a step of allowing a connection of said user terminal with said service community;
wherein, in said service community, a charge concierge who meets a service request from said user terminal, and a watching concierge who watches communication information between said user and said charge concierge, are determined, communication information between said user terminal and a terminal of said charge concierge is watched by watching means, and when watched information meets a predetermined condition, a warning is sent out or said communication is forcibly interrupted.

14. A storage medium having a program for causing a computer to carry out the method as set forth in any one of claims 1 to 13.
